(19) Europäisches Patentamt
European Patent Office
Office européen des brevets

(11) EP 4 656 663 A1

(12) **EUROPEAN PATENT APPLICATION**
published in accordance with Art. 153(4) EPC

(43) Date of publication:
03.12.2025 Bulletin 2025/49

(51) International Patent Classification (IPC):
*C08G 63/127* (2006.01)    *C08J 3/03* (2006.01)
*C09D 5/02* (2006.01)    *C09D 167/00* (2006.01)

(21) Application number: 23918638.0

(22) Date of filing: 21.12.2023

(52) Cooperative Patent Classification (CPC):
C08G 63/127; C08J 3/03; C09D 5/02; C09D 167/00

(86) International application number:
PCT/JP2023/045870

(87) International publication number:
WO 2024/157684 (02.08.2024 Gazette 2024/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.01.2023 JP 2023010496

(71) Applicant: TOYOBO MC Corporation
Osaka-shi, Osaka 530-0001 (JP)

(72) Inventors:
• MIEDA, Hiroyuki
Otsu-shi, Shiga 520-0292 (JP)
• SUGIMOTO, Kanta
Otsu-shi, Shiga 520-0292 (JP)
• HAMANO, Masami
Otsu-shi, Shiga 520-0292 (JP)
• MIKAMI, Tadahiko
Otsu-shi, Shiga 520-0292 (JP)

(74) Representative: Müller-Boré & Partner
Patentanwälte PartG mbB
Friedenheimer Brücke 21
80639 München (DE)

(54) **CRYSTALLINE POLYESTER RESIN AQUEOUS DISPERSION, COATING COMPOSITION, COATING FILM AND METAL CAN**

(57) An object of the present invention is to provide a crystalline polyester resin aqueous dispersion containing a crystalline polyester resin that has excellent solvent solubility and therefore needs only a small amount of an organic solvent used to form an aqueous dispersion, and being capable of forming a coating film that has excellent properties such as processability and retort resistance; a coating composition containing the crystalline polyester resin aqueous dispersion; a coating film; and a metal can. Another object of the present invention is to obtain a coating that contains no curing agent and therefore excludes a harmful substance such as bisphenol A and formaldehyde. A crystalline polyester resin aqueous dispersion containing a crystalline polyester resin (A) satisfying requirements (1) to (3) described below. (1) The crystalline polyester resin (A) has a melting point of 120°C to 160°C. (2) The crystalline polyester resin (A) has at least one endothermic peak between 70°C and 120°C and at least one endothermic peak between 121°C and 160°C when heated from -50°C to 200°C at 20°C/min by differential scanning calorimetry (DSC) after subjected to an aging treatment at 80°C for 10 minutes. (3) The crystalline polyester resin (A) has an acid value of 180 eq/ton or more.

[FIG. 1]

**Description**

Technical Field

The present invention relates to a crystalline polyester resin aqueous dispersion. In detail, the present invention relates to a crystalline polyester resin suitable for a coating for cans, in more detail a crystalline polyester resin suitable for covering an inner surface of cans housing beverages and food (hereinafter, collectively called "food and drink"), and to an aqueous dispersion that contains the crystalline polyester resin, a coating composition, a coating film, and a metal can that has the coating film.

Background Art

Metal cans such as a beverage can and a food can are coated with an organic resin so as to prevent corrosion of metal (corrosion resistance) caused by food and so as not to impair flavor and taste of the contents (flavor properties). On a coating film formed by this coating, high-load processing such as necking and threading is performed in a step of forming a metal top portion of a bottle can. Accordingly, the coating film is required to have resistance to such post processing (processability). The coating film is further required to have adhesiveness to a metal material, curing properties, and the like. Further, the coating film is, in some cases, exposed to high-temperature and high-humidity conditions of retort sterilization or the like, depending on the use thereof. Even in such cases, the coating film is required not only to maintain adhesiveness to a metal material but also to cause no whitening (retort resistance).

Conventionally, as a coating having the corrosion resistance and the flavor properties and tolerating a can forming process, widely used are epoxy-based coatings such as an epoxy phenolic coating, an epoxy-amino-based coating, and an epoxy acrylic coating; polyester-based coatings such as a polyester phenolic coating, a polyester-amino-based coating, and polyester-isocyanate-based coating; and vinyl chloride-based coatings. Recent study, however, reports possibility that bisphenol A that is a raw material for epoxy resins affects estrogen action and brains of fetuses and infants. The vinyl chloride-based coatings also have a problem of a stabilizer and a problem of generating dioxin in incineration. Formaldehyde that is used as a raw material for phenolic resins, amino resins, and the like and remains in the coating is known to have harmful effects on human bodies, such as carcinogenic properties, and adversely affect the flavor properties of the contents. Similarly, an isocyanate resin is known to have harmful effects on human bodies, such as carcinogenic properties. Further, there is also a concern about environmental contamination and influence on environment of work caused by the use of an organic solvent.

Due to concerns about various adverse effects on human bodies, an aqueous coating that is not based on these raw materials is desired in the market, but the circumstances are that a coating that has performance satisfactory enough for application to cans has not been obtained. Further, even in the cases of an aqueous coating, an organic solvent is needed in a step of forming a resin into an aqueous dispersion. Due to concerns about adverse effects on environment pollution and the like, an aqueous coating that can be prepared with only a small usage of an organic solvent is required.

From this viewpoint, there is proposed, as a resin composition for metal containers or metal lids, for example, an aqueous coating composition obtained by dispersing an acrylic modified polyester resin and a β-hydroxyalkylamide crosslinking agent in an aqueous medium, wherein the acrylic modified polyester resin has been obtained by graft polymerization of a polyester resin having an ethylenic double bond in a terminal portion thereof, with a polymerizable unsaturated monomer component (Patent Document 1).

Patent Document 2 proposes a method for producing a crystalline polyester resin aqueous dispersion.

Prior Art Documents

Patent Documents

Patent Document 1: Japanese Patent Application Laid-Open (JP-A) No. 2020-79393
Patent Document 2: Japanese Patent Application Laid-Open (JP-A) No. 2018-123249

Disclosure of the Invention

Problem that the Invention is to Solve

However, the use of the high-acid-value acrylic modified polyester resin described in Patent Document 1 could not give sufficient processability. In addition, there has been a problem that an unreacted portion of the β-hydroxyalkylamide crosslinking agent is left in the coating film and the retort resistance is decreased. In Patent Document 2, all the crystalline polyester resins described therein have low melting points. Accordingly, it has been found that the retort resistance of the crystalline polyester resins described in Patent Document 2 is poor. Further, when the melting point of the crystalline polyester resin described in Patent Document 2 is increased so as to improve the retort resistance, the solvent solubility is deteriorated and the crystalline polyester resin cannot be made into an aqueous dispersion.

An object of the present invention is to provide a crystalline polyester resin aqueous dispersion containing a crystalline polyester resin that has excellent solvent solubility and therefore needs only a small amount of an organic solvent used to form an aqueous dispersion, and being capable of forming a coating film that has excellent properties such as processability and retort resistance; a coating composition containing the crystalline polyester resin aqueous dispersion; a coating film; and a metal can. Another object of the present invention is to obtain a coating that contains no curing agent and therefore excludes a harmful substance such as bisphenol A and formaldehyde.

Means for Solving the Problem

The inventors of the present invention have variously studied the above, and found that by using a crystalline polyester resin having different endothermic peaks by a specific aging treatment, no harmful substance such as bisphenol A and formaldehyde is left, the resin has excellent solvent solubility when formed into an aqueous dispersion, and the obtained coating film has excellent processability and remarkably improves the retort resistance. The inventors have thus arrived at the present invention. That is, the present invention includes the following aspects.

[1] A crystalline polyester resin aqueous dispersion containing a crystalline polyester resin (A) satisfying requirements (1) to (3) described below.

(1) The crystalline polyester resin (A) has a melting point of 120°C to 160°C.
(2) The crystalline polyester resin (A) has at least one endothermic peak between 70°C and 120°C and at least one endothermic peak between 121°C and 160°C when heated from -50°C to 200°C at 20°C/min by differential scanning calorimetry (DSC) after subjected to an aging treatment at 80°C for 10 minutes.
(3) The crystalline polyester resin (A) has an acid value of 180 eq/ton or more.

[2] A coating composition containing the crystalline polyester resin aqueous dispersion according to [1], wherein the coating composition has a content of a curing agent of less than 1 part by mass, relative to 100 parts by mass (solid content) of the crystalline polyester resin (A) in the crystalline polyester resin aqueous dispersion.
[3] A coating film obtained from the coating composition according to [2].
[4] A metal can having the coating film according to [3].

Effects of the Invention

The crystalline polyester resin aqueous dispersion of the present invention contains therein a crystalline polyester resin having a prescribed composition and therefore having excellent solvent solubility when formed into an aqueous dispersion, and is capable of, without containing any curing agent, forming a coating film that has excellent properties such as processability and retort resistance, and thus capable of excluding a harmful substance such as bisphenol A and formaldehyde. Therefore, the crystalline polyester resin aqueous dispersion of the present invention is suitable for a coating composition used for beverage cans and food cans, a coating film, and a metal can.

Brief Description of the Drawing

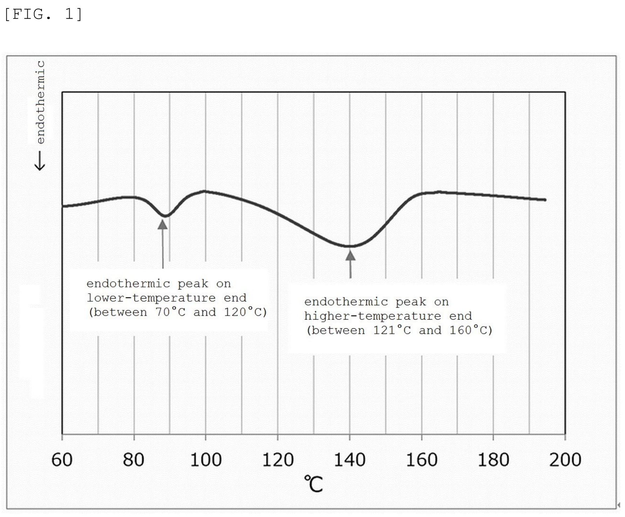

FIG. 1 is a DSC chart (obtained by heating from -50°C to 200°C at 20°C/min by differential scanning calorimetry (DSC)) of a crystalline polyester resin (Synthetic Example (h)) that was subjected to an aging treatment at 80°C for 10 minutes.

Mode for Carrying Out the Invention

As hereunder, an embodiment of the present invention will be explained in detail.

<Crystalline polyester resin (A)>

<Requirement (1)>

The requirement (1) is explained. The melting point (Tm) in the present invention is a temperature at the top of an endothermic peak having the greatest heat quantity of fusion (maximum endothermic peak) obtained in a heating process performed by heating the crystalline polyester resin from -50 to 200°C at 20°C/min, with use of a differential scanning calorimeter (DSC), after subjecting the crystalline polyester resin to an aging treatment at 100°C for 30 hours.

The endothermic peak in the present invention refers to an endothermic peak having a heat quantity of fusion of 0.01 J/g or more.

In the requirement (1), the range of the melting point (Tm) is 120 to 160°C, preferably 125 to 155°C, more preferably 130 to 150°C, and further preferably 135 to 145°C. By setting the melting point to the above lower limit value or more, the crystallinity becomes good and excellent retort resistance can be exerted. By setting the melting point to the above upper limit value or less, excellent processability and solvent solubility can be exerted.

In the requirement (1), the heat quantity of fusion in the maximum endothermic peak of the melting point (Tm) is preferably 15 to 30 J/g, more preferably 18 to 25 J/g, and further preferably 20 to 23 J/g. With the heat quantity of fusion in the above range, the coating film having excellent retort resistance can be obtained.

<Requirement (2)>

The requirement (2) is explained. The crystalline polyester resin (A) of the present invention is characterized by having at least one endothermic peak between 70°C and 120°C and at least one endothermic peak between 121°C and 160°C when heated from -50°C to 200°C at 20°C/min by differential scanning calorimetry (DSC) after subjected to an aging treatment at 80°C for 10 minutes. The crystalline polyester resin (A) more preferably has one endothermic peak each between 70°C and 120°C and between 121°C and 160°C. These pluralities of endothermic peaks attribute to the difference in crystallinity of the crystalline polyester resin (A) of the present invention. The endothermic peak on the higher-temperature end (between 121°C and 160°C) is considered to be derived from the generation of a stable crystal. That is, it has been found in the present invention that the crystalline polyester resin (A) having an endothermic peak between 121°C and 160°C leads to excellent heat resistance, resulting in a tendency of giving excellent retort resistance. On the other hand, the at least one endothermic peak on the lower-temperature end (between 70°C and 120°C) is considered to be derived from the generation of an unstable crystal. That is, the crystalline polyester resin (A) having at least one endothermic peak between 70°C and 120°C partially has an unstable crystal generated therein and therefore a main chain thereof tends to be easily disentangled, and thus the crystalline polyester resin (A) has excellent solvent solubility. It has been found in the present invention that the crystalline polyester resin having excellent solvent solubility results in a tendency of easily giving a stable crystalline polyester resin aqueous dispersion. By controlling the temperature ranges of these plurality of endothermic peaks, both retort resistance and the solvent solubility can be achieved.

The range of the endothermic peak on the lower-temperature end in the requirement (2) is between 70°C and 120°C, preferably between 75°C and 115°C, more preferably between 80°C and 110°C, and further preferably between 85°C and 105°C. By setting the endothermic peak to 70°C or higher, the retort resistance becomes good. By setting the endothermic peak to 120°C or lower, the solvent solubility becomes good and therefore a stable crystalline polyester resin aqueous dispersion can be obtained.

In the requirement (2), the heat quantity of fusion in the endothermic peak on the lower-temperature end is preferably 0.1 to 4 J/g, more preferably 0.3 to 3 J/g, and further preferably 0.5 to 2 J/g. With the heat quantity of fusion in the above range, the solvent solubility is good.

<Requirement (3)>

The requirement (3) is explained. The crystalline polyester resin (A) of the present invention needs to have an acid value of 180 eq/ton or more, preferably 200 eq/ton or more, more preferably 220 eq/ton or more, and further preferably 240 eq/ton or more. By setting the acid value to the above lower limit value or more, sufficient aqueous dispersion stability can be secured. The upper limit value of the acid value is not particularly limited, but the polyester resin (A) preferably has an acid value of 400 eq/ton or less so as to reduce unreacted portions of the acid components in an acid addition reaction and the amount of oligomers.

The acid value of the crystalline polyester resin (A) in the present invention can be imparted by any method. Examples of a method for imparting an acid value include a method for adding and reacting a compound having a polycarboxylic anhydride group in a molecule thereof in a late stage of polycondensation, and a method for forming a high-acid-value prepolymer (oligomer), and next subjecting the prepolymer to polycondensation so as to give a polyester resin having an acid value. Due to easiness of operation and easiness of obtaining a target acid value, the former adding and reacting method is preferable.

Among the compounds for imparting an acid value to the crystalline polyester resin (A) in the present invention and having a polycarboxylic anhydride group in a molecule thereof, examples of a carboxylic monoanhydride include phthalic anhydride, succinic anhydride, maleic anhydride, trimellitic anhydride, itaconic anhydride, and citraconic anhydride. One or two or more can be selected from among these examples and used. Among these examples, trimellitic anhydride is preferable from the aspect of versatility and economic efficiency.

Among the compounds for imparting an acid value to the crystalline polyester resin (A) in the present invention and having a polycarboxylic anhydride group in a molecule thereof, examples of a carboxylic polyanhydride include pyromellitic anhydride, 1,2,3,4-butanetetracarboxylic dianhydride, 1,2,3,4-pentanetetracarboxylic dianhydride, 3,3',4,4'-benzophenonetetracarboxylic dianhydride, 2,3,6,7-naphthalenetetracarboxylic dianhydride, ethylene glycol bistrimellitate dianhydride, and 2,2',3,3'-biphenyltetracarboxylic dianhydride. One or two or more can be selected from among these examples and used. Among these examples, ethylene glycol bistrimellitate dianhydride is preferable from the aspect of versatility and economic efficiency.

As to the compounds for imparting an acid value and having a polycarboxylic anhydride group in a molecule thereof, a carboxylic monoanhydride and carboxylic polyanhydride can be used singly or in combination.

The crystalline polyester resin (A) in the present invention has a chemical structure that can be obtained from a polycondensation product of a polycarboxylic acid and a polyalcohol, wherein the polycarboxylic acid and the polyalcohol each contains one or two or more selected components.

By selecting a monomer capable of partially breaking molecular planarity and symmetry, and adjusting the copolymerization proportions, the crystalline polyester resin (A) in the present invention can be adjusted to have, without greatly lowering the melting point of the resin, at least one endothermic peak between 70°C and 120°C, under the aging treatment conditions of 80°C and 10 minutes.

A polycarboxylic acid component used in the present invention is not particularly limited, and, for example, polycarboxylic acids or esters thereof, and anhydrides thereof described below can be used.

As to the polycarboxylic acid component used in the present invention, it is possible to use a dicarboxylic acid (a) (hereinafter, referred to as a "component (a)") having a ring structure, and having a carboxylic acid group at the para positions when the ring is a benzene ring, at the 2,6-positions when the ring is a naphthalene ring, and at the 1,4-positions when the ring is a cyclohexyl ring. The carboxylic acid group of the component (a) is preferred to be directly bonded to the ring structure. Examples of the component (a) include terephthalic acid, 2,6-naphthalenedicarboxylic acid, and 1,4-cyclohexanedicarboxylic acid. One or two or more thereof can be used.

When the polycarboxylic acid component contains the component (a), the polyester resin has increased crystallinity and the coating film has excellent retort resistance. More preferred is a dicarboxylic acid having a benzene ring as the ring structure and having a carboxylic acid group at the para positions, or a dicarboxylic acid having a naphthalene ring as the ring structure and having a carboxylic acid group at the 2,6-positions, because these dicarboxylic acids have less steric hindrance and particularly high crystallinity among examples of the component (a). Further preferred is a dicarboxylic acid having a benzene ring as the ring structure and having a carboxylic acid group at the para positions because this dicarboxylic acid has structurally further less steric hindrance.

When the component (a) is used as the polycarboxylic acid component, the copolymerization proportion of (b) in the polycarboxylic acid component described below is preferably lower than the copolymerization proportion of the component (a).

When the total amount of the polycarboxylic acid component is defined as 100 mol%, the copolymerization proportion (mol%) of the component (a) is preferably 45 to 95 mol%, more preferably 50 to 90 mol%, and further preferably 55 to 85 mol%. By setting the copolymerization proportion of the component (a) to 45 mol% or more, the polyester resin has increased crystallinity and the coating film improves the retort resistance. By setting the copolymerization proportion of the component (a) to 95 mol% or less, the obtained polyester has good solvent solubility, thus preventing aggregation thereof, and a stable crystalline polyester resin aqueous dispersion can be obtained.

Examples of the polycarboxylic acid component used in the present invention include a dicarboxylic acid (b) (hereinafter, referred to as a "component (b)"), except for the component (a), having a ring structure. The ring structure of the component (b) is preferably a benzene ring, a furan ring, a naphthalene ring, or a cyclohexyl ring. A carboxylic acid group of the component (b) is preferred to be directly bonded to the ring structure. Examples of the component (b) include orthophthalic acid, isophthalic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,7-naphthalenedicarboxylic acid, sodium 5-sulfoisophthalate, 2,5-furandicarboxylic acid, 1,2-cyclohexanedicarboxylic acid, 1,3-cyclohexanedicarboxylic acid, and hexahydrophthalic acid. One or two or more thereof can be used. Among these acids, in terms of being particularly excellent in achieving both solvent stability and retort resistance, the component (b) preferably has a benzene ring as the ring structure, and is more preferably orthophthalic acid.

When the component (b) is used as the polycarboxylic acid component, the crystallinity of the polyester resin is partially broken and thus the polyester resin has excellent solvent solubility. When the total amount of the polycarboxylic acid component is defined as 100 mol%, the copolymerization proportion of the component (b) is preferably 50 mol% or less, more preferably 45 mol% or less, and further preferably 40 mol% or less. By setting the copolymerization proportion of the component (b) to 50 mol% or less, the obtained polyester has good retort resistance.

As to the polycarboxylic acid component used in the present invention, an aliphatic polycarboxylic acid, an alicyclic polycarboxylic acid, an aromatic polycarboxylic acid, or the like, other than the component (a) or (b) can also be used. Examples of the aliphatic polycarboxylic acid include fumaric acid, adipic acid, sebacic acid, malonic acid, and succinic acid. Examples of the alicyclic polycarboxylic acid and the aromatic polycarboxylic acid include tri- or more functional carboxylic acids. One or two or more thereof can be used.

A polyalcohol component used in the present invention is not particularly limited, and, for example, polyalcohol described below can be used.

As to a polyalcohol component used in the present invention, a polyalcohol (c) (hereinafter, referred to as a "component (c)") having a side chain can be used. The component (c) is preferably a diol having a side chain. The side chain of the component (c) refers to an atom or group of atoms branched from a main chain containing a hydrocarbon group (carbon chain) connecting two hydroxyl groups. The side chain of the component (c) is preferably an alkyl group. The alkyl group has preferably 1 to 50 carbon atoms, more preferably 2 to 40 carbon atoms, and further preferably 3 to 35 carbon atoms. The component (c) may have one side chain or two or more side chains, and may have preferably five or less side chains, more preferably four or less side chains, and further preferably three or less side chains. The alkyl group may be a straight chain or may have a side chain. Examples of the component (c) include 1,2-propylene glycol, 1,2-butanediol, 1,3-butanediol, 2-methyl-1,3-propanediol, neopentyl glycol, 3-methyl-1,5-pentanediol, 2-methyl-1,3-hexanediol, 2-methyl-2-ethyl-1,3-propanediol, 2,2-diethyl-1,3-propanediol, 2-ethyl-2-n-propyl-1,3-propanediol, 2,2-di-n-propyl-1,3-propanediol, 2-n-butyl-2-ethyl-1,3-propanediol, 2,2-di-n-butyl-1,3-propanediol, 2,4-diethyl-1,5-pentanediol, 2-ethyl-1,3-hexanediol, mannitol, sorbitol, dimer diol, polypropylene glycol, and pentaerythritol. One or two or more thereof may be used as the component (c).

When the polyalcohol component contains the component (c), the crystallinity of the polyester resin is partially broken and thus the polyester resin has excellent solvent solubility. When the total amount of the polyalcohol component is defined as 100 mol%, the copolymerization proportion of the component (c) is preferably 30 mol% or less, more preferably 20 mol% or less, and further preferably 10 mol% or less. By setting the copolymerization proportion of the component (c) to 30 mol% or less, the obtained polyester can achieve both the solvent solubility and the retort resistance.

When the component (c) is used as the polycarboxylic acid component, the copolymerization proportion of a component (d) or (e) described below in the polyalcohol component is preferably lower than the copolymerization proportion of the component (c).

As to the polyalcohol component used in the present invention, a polyalcohol (d) (hereinafter, referred to as a "component (d)") having a straight-chain structure can be used. Examples of the component (d) include 1,3-propylene glycol, 1,4-butanediol, 1,5-pentanediol, 1,6-hexanediol, and 1,8-octanediol, and one or two or more thereof can be used. Among them, in terms of being particularly excellent in achieving both solvent stability and retort resistance, the component (d) is preferably 1,4-butanediol.

When the component (d) is used as the polyalcohol component, the polyester resin has increased crystallinity and the coating film has excellent retort resistance. When the total amount of the polyalcohol component is defined as 100 mol%, the copolymerization proportion of the component (d) is preferably 50 mol% or more, more preferably 60 mol% or more, and further preferably 70 mol% or more. By setting the copolymerization proportion of the component (d) to 50 mol% or more, the obtained polyester can improve the retort resistance.

As to the polyalcohol component used in the present invention, a polyalcohol (e) (hereinafter, referred to as a "component (e)") having an aromatic ring skeleton or an alicyclic skeleton can be used. Examples of the component (e) include 1,4-cyclohexanedimethanol, tricyclodecanedimethanol, hydroquinone, catechol, and resorcinol, and one or two or more thereof can be used.

When the component (e) is used, the copolymerization proportion of the component (e) is preferably 30 mol% or less, more preferably 20 mol% or less, and further preferably 10 mol% or less, and may be even 0 mol%, provided that the total amount of the polyalcohol component is defined as 100 mol%. By setting the copolymerization proportion of the component (e) to 30 mol% or less, the obtained polyester can achieve both the solvent solubility and the retort resistance.

When isosorbide is used as the polyalcohol component used in the present invention, the copolymerization proportion of the isosorbide is preferably less than 5 mol%, more preferably less than 1 mol%, provided that the total amount of the polyalcohol component is defined as 100 mol%. Most preferably, the polyalcohol component does not contain any isosorbide. By setting the copolymerization proportion of the isosorbide to less than 5 mol%, the obtained polyester can improve the solvent solubility and the retort resistance.

When ethylene glycol is used as the polyalcohol component used in the present invention, the copolymerization proportion of the ethylene glycol is preferably less than 40 mol%, more preferably less than 30 mol%, and further preferably less than 20 mol%, and may be even 0 mol%, provided that the total amount of the polyalcohol component is defined as 100 mol%. By setting the copolymerization proportion of the ethylene glycol to less than 40 mol%, the obtained polyester has good solvent solubility and processability.

Regarding the copolymerization proportions (mol%) in the crystalline polyester resin (A) of the present invention, the total of the components (a) and (d) is preferably 140 mol% to 175 mol%, more preferably 150 mol% to 170 mol%, and further preferably 155 mol% to 160 mol%, provided that each of the total of the polycarboxylic acid component and the total of the polyalcohol component is defined as 100 mol%. By setting the total of the components (a) and (d) to 140 mol% or more, the retort resistance becomes good. By setting the total of the components (a) and (d) to 175 mol% or less, the solvent solubility becomes good.

Regarding the copolymerization proportions (mol%) in the crystalline polyester resin (A) of the present invention, the total of the components (b) and (c) is preferably 15 mol% to 55 mol%, more preferably 20 mol% to 50 mol%, and further preferably 30 mol% to 45 mol%, provided that each of the total of the polycarboxylic acid component and the total of the polyalcohol component is defined as 100 mol%. By setting the total of the components (b) and (c) to 5 mol% or more, the solvent solubility becomes good. By setting the total of the components (b) and (c) to 55 mol% or less, the retort resistance becomes good.

The copolymerization proportions (mol%) in the crystalline polyester resin (A) of the present invention are preferably set so that when the values of copolymerization proportions (mol%) of components are plugged into a formula described below, provided that each of the total of the polycarboxylic acid component and the total of the polyalcohol component is defined as 100 mol%, the value of the formula is 95 mol% or more and less than 145 mol%.

Formula: (component (a) (mol%) + component (d) (mol%)) - (component (b) (mol%) + component (c) (mol%))

By setting the value to a value in the above range, the crystalline polyester resin has particularly good solvent solubility and the coating film has particularly good processability and retort resistance. For further improvement of the performance, the value is more preferably 98 mol% or more, further preferably 100 mol% or more, and especially preferably 110 mol% or more. The value is more preferably 140 mol% or less, further preferably 135 mol% or less, particularly preferably 130 mol% or less, and especially preferably 120 mol% or less.

As to the polycarboxylic acid component and the polyalcohol component that constitute the crystalline polyester resin (A) in the present invention, a raw material derived from a biomass resource can be used. The biomass resource includes, for example: something in the form of starch, cellulose, or the like into which sunlight energy is converted by plant photosynthesis and which stores the sunlight energy; animals that grow by eating plants; and products obtained by processing plants and animals. More preferred among these biomass resources is a plant resource, and examples of the plant resource include wood, rice straw, rice hull, rice bran, old rice, corn, sugar cane, cassava, sago palms, tofu refuse, corn cobs, tapioca refuse, bagasse, vegetable oil refuse, potatoes, buckwheat, soybeans, oils and fats, waste paper, papermaking residues, marine product residues, livestock wastes, sludge, and food wastes. Corn, sugar cane, cassava, and sago palms are more preferable.

Specific examples of a polycarboxylic acid raw material derived from a biomass resource include adipic acid, sebacic acid, fumaric acid, itaconic acid, terephthalic acid, and 2,5-furandicarboxylic acid. These may be used singly or in a mixture of two or more thereof.

Specific examples of a polyalcohol raw material derived from a biomass resource include ethylene glycol, 1,2-propylene glycol, 1,3-propylene glycol, neopentyl glycol, 1,4-butanediol, and 1,4-cyclohexanedimethanol. These may be used singly or in a mixture of two or more thereof.

The crystalline polyester resin (A) in the present invention preferably has a branched structure. Having a branched structure refers to having a branched structure in the main chain of polyester. For introducing a branched structure into the polyester, there is, for example, a method for copolymerizing a trifunctional or higher-functional component as part of the polycarboxylic acid component and/or the polyalcohol component in a polycondensation reaction of polyester. As to a trifunctional or higher-functional polycarboxylic acid component, polycarboxylic acids or esters thereof, and polycarboxylic anhydrides described below can be used. Specifically, examples thereof include trimellitic acid, pyromellitic acid, and benzophenonetetracarboxylic acid. Examples of a trifunctional or higher-functional polyalcohol component include glycerine, trimethylolethane, trimethylolpropane, mannitol, sorbitol, and pentaerythritol. One or two or more thereof can be used. When the crystalline polyester resin (A) has a branched structure, the obtained coating film has good processability.

The trifunctional or higher-functional polycarboxylic acid component and/or the trifunctional or higher-functional polyalcohol component are/is preferably 0.1 mol% or more, more preferably 0.5 mol% or more, and further more preferably 1 mol% or more, to the total crystalline polyester resin (A) defined as 100 mol%. The trifunctional or higher-functional polycarboxylic acid component and/or the trifunctional or higher-functional polyalcohol component are/is preferably 5 mol% or less, more preferably 3 mol% or less, further more preferably 2 mol% or less, and particularly preferably 1.5 mol% or less, to the total crystalline polyester resin (A) defined as 100 mol%. By setting the trifunctional or higher-functional polycarboxylic acid component and/or the trifunctional or higher-functional polyalcohol component to the above range, crystallinity of the crystalline polyester resin (A) becomes appropriately high, resulting in a good retort resistance or prevention of gelation which may be generated during polymerization of polyester.

The concentration of a metal sulfonate salt in the crystalline polyester resin (A) in the present invention is preferably less than 50 eq/ton, more preferably 20 eq/ton or less, further preferably 10 eq/ton or less, particularly preferably 5 eq/ton or less. By setting the concentration of a metal sulfonate salt to less than 50 eq/ton, the obtained polyester has lowered hydrophilicity and the retort resistance is improved.

Next, a method for producing the crystalline polyester resin (A) of the present invention is described. In an esterification/exchange reaction, all the monomer components and/or low polymers thereof are heated and melted, and thus reacted. The esterification/exchange temperature is preferably 180 to 250°C, and more preferably 200 to 250°C. The reaction time is preferably 1.5 to 10 hours, and more preferably 3 to 6 hours. The reaction time is a time from reaching a desired reaction temperature until the following polycondensation reaction. In the polycondensation reaction, a polyalcohol component is distilled away under reduced pressure at a temperature of 220 to 280°C from an esterified product obtained by the esterification reaction, and the polycondensation reaction is progressed until reaching a desired molecular weight. The polycondensation reaction temperature is preferably 220 to 280°C, and more preferably 240 to 275°C. The degree of decompression is preferably 130 Pa or less. An insufficient degree of decompression tends to prolong the polycondensation time and is therefore not preferable. The pressure is preferred to be gradually reduced over 30 to 180 minutes that are the decompression time from atmospheric pressure to reaching 130 Pa or less.

In the esterification/exchange reaction and the polycondensation reaction, polymerization is performed using as necessary an organic titanate compound such as tetrabutyl titanate, germanium dioxide, antimony oxide, and an organic tin compound such as tin octylate. An organic titanate compound is preferable from the aspect of reaction activity, and germanium dioxide is preferable from the aspect of coloring of resin.

The crystalline polyester resin (A) in the present invention has a glass transition temperature of preferably 10°C or more, and more preferably 15°C or more, in terms of water resistance, particularly retort resistance of the coating film. In terms of processability, the glass transition temperature is preferably 50°C or less, and more preferably 40°C or less.

In the present invention, a crystalline polyester resin refers to a polyester resin which exhibits a melting point (Tm) when the polyester resin is measured under the above conditions. The polyester resin having a high crystallinity has a high melting point.

The crystalline polyester resin (A) of the present invention has a reduced viscosity of preferably 0.2 to 0.8 dl/g, more preferably 0.4 to 0.8 dl/g, and further preferably 0.6 to 0.8 dl/g. When the crystalline polyester resin (A) has a reduced viscosity of 0.2 dl/g or more, the coating film has good toughness and processability. On the other hand, when the crystalline polyester resin (A) has a reduced viscosity of 0.8 dl/g or less, the crystalline polyester resin has good solvent solubility.

<Crystalline polyester resin aqueous dispersion>

The crystalline polyester resin aqueous dispersion of the present invention is an aqueous dispersion containing the crystalline polyester resin (A) described above.

The crystalline polyester resin aqueous dispersion of the present invention can be prepared by, for example, a dispersion method (i) for dissolving the crystalline polyester resin (A) in a water-soluble organic solvent capable of dissolving the crystalline polyester resin (A) and successively adding a basic compound as necessary and water; and a dispersion method (ii) for mixing the crystalline polyester resin (A) and water, a water-soluble organic solvent capable of dissolving the crystalline polyester resin (A), and a basic compound as necessary, and heating the mixture. Alternatively, when the amount of an organic solvent is desired to be reduced or when an aqueous dispersion is desired to be formed by completely removing an organic solvent, it is possible to perform a dispersion process by using an organic solvent having a boiling point of 100°C or less, and then extract the solvent by heating or under reduced pressure. The crystalline polyester resin is preferred to be dispersed by the former method (i) in terms of film-forming properties.

In this case, the temperature of the organic solvent during the dissolution of the crystalline polyester resin (A) is preferably 40 to 160°C, more preferably 50 to 140°C, further more preferably 60 to 130°C, and most preferably 70 to 100°C. When the temperature is 40°C or more, the crystalline polyester resin (A) is sufficiently dissolved and therefore the entanglement of molecular chains can be prevented. When the temperature is 160°C or less, the heat deterioration of the crystalline polyester resin (A) can be suppressed. Examples of the organic solvent capable of dissolving the crystalline polyester resin (A) by being heated in a temperature range of 40 to 160°C include methyl ethyl ketone, cyclohexanone, dimethylacetamide, dimethylformamide, N-methylpyrrolidone, tetrahydrofuran, 1,4-dioxane, 1,3-dioxane, 1,3-dioxolane, 1,2-hexanediol, methyl cellosolve, butyl cellosolve, ethyl carbitol, butyl carbitol, propylene glycol monomethyl ether, propylene glycol monopropyl ether, propylene glycol monobutyl ether, and triethylene glycol monobutyl ether. Among these examples, methyl ethyl ketone, butyl cellosolve, propylene glycol monopropyl ether, and propylene glycol monobutyl ether are preferable.

When the crystalline polyester resin (A) is dissolved at 100°C or more, it is preferable to obtain an aqueous dispersion by cooling the crystalline polyester resin solution to a temperature of 100°C or less and then successively adding water and a basic compound as necessary to the resin solution under stirring, and thus performing phase transition.

The content of the organic solvent is preferably 20 mass% or less, more preferably 15 mass% or less, and further preferably 13 mass% or less, relative to 100 parts by mass of the crystalline polyester resin aqueous dispersion of the present invention. By setting the content of the organic solvent to 20 mass% or less, the existence of a flash point derived from the organic solvent can be prevented.

As to the basic compound used when the crystalline polyester resin (A) of the present invention is formed into an aqueous dispersion, preferable one is a compound that volatilizes in a drying or baking step during the formation of the coating film. For example, ammonia and/or an organic amine compound having a boiling point of 250°C or less may be used. Preferable examples of the basic compound include triethylamine, N,N-diethylethanolamine, N,N-dimethylethanolamine, aminoethanolamine, N-methyl-N,N-diethanolamine, isopropylamine, iminobispropylamine, ethylamine, diethylamine, 3-ethoxypropylamine, 3-diethylaminopropylamine, sec-butylamine, propylamine, methylaminopropylamine, dimethylaminopropylamine, methyliminobispropylamine, 3-methoxypropylamine, monoethanolamine, diethanolamine, triethanolamine, morpholine, N-methylmorpholine, and N-ethylmorpholine. These basic compounds need to be added in an amount that can at least partially neutralize the carboxyl groups of the crystalline polyester resin (A). Specifically, the basic compound is desired to be added in 0.5 to 1.5 equivalents with respect to the carboxyl group equivalent.

The average particle size of the crystalline polyester resin aqueous dispersion according to the present invention is very important because it greatly affects the appearance of the coating film and the storage stability. The average particle size is preferably 30 to 300 nm, more preferably 50 to 250 nm, and particularly preferably 70 to 200 nm. When the average particle size is 300 nm or less, the crystalline polyester resin aqueous dispersion is stably dispersed, and also has the good film-forming properties, and therefore the obtained coating film has the good appearance. When the average particle size is 30 nm or more, fusion and aggregation between dispersions can be prevented.

The crystalline polyester resin aqueous dispersion of the present invention is preferably prepared at a resin solid content concentration of 10 to 45 mass%, more preferably 15 to 40 mass%, and further more preferably 20 to 35 mass%. When the crystalline polyester resin aqueous dispersion has a resin solid content concentration of 45 mass% or less, the aqueous dispersion has suitable viscosity and good dispersion stability because the aggregation between resin particles can be prevented. When the crystalline polyester resin aqueous dispersion has a resin solid content concentration of 10 mass% or more, it is easier to put into practical use in both production and usage aspects.

The coating composition of the present invention contains at least the crystalline polyester resin aqueous dispersion described above. The coating composition contains, as a main agent, the crystalline polyester (A) in the aqueous dispersion. In the coating composition, the "main agent" is defined as a component contained in the highest content (mass proportion) among the solid components forming a coating film (non-volatile components except volatile substances such as water and the organic solvent), in the coating composition.

The coating composition of the present invention is capable of forming a coating film by containing singly the crystalline polyester resin aqueous dispersion, without having a curing agent blended therein. Therefore, the coating composition of the present invention preferably contains substantially no curing agent. That is, the content of a curing agent is preferably less than 1 part by mass (in terms of solid content) relative to 100 parts by mass (in terms of solid content) of the crystalline polyester resin (A) in the aqueous dispersion.

The content of the curing agent in the coating composition of the present invention is preferably less than 1 part by mass relative to 100 parts by mass (solid content) of the crystalline polyester resin (A). The content of the curing agent is more preferably less than 0.5 part by mass, and further more preferably less than 0.1 part by mass. Most preferably, no curing agent is contained. When the content of the curing agent is less than the above range, the coating composition may not only has excellent economic efficiency but may also possibly prevent decrease of processability which may be caused by a self condensation reaction of the curing agent, prevent generation of a harmful outgas such as a volatile of a blocking agent and formaldehyde, and have excellent long storage stability.

Here, the curing agent refers to any known curing agent that reacts with the polyester resin and thus forms a crosslinking structure. Examples of a form of the crosslinking structure include: a reaction of generating an intermolecular carbon-carbon bond by reacting an unsaturated double bond in the polyester resin through a radical addition reaction, a cationic addition reaction, an anionic addition reaction, or the like; and formation of an intermolecular bond through a condensation reaction, a polyaddition reaction, a transesterification reaction, or the like with a polyvalent carboxylic acid group or a polyhydric alcohol group in the polyester resin. Examples of the curing agent include a phenolic resin, an amino resin, an isocyanate compound, an epoxy compound, a β-hydroxylamide compound, and an unsaturated bond-containing resin.

The coating composition of the present invention is optimal for a coating for food or beverage cans. For the use as a coating for food or beverage cans, various additives are sometimes blended according to the purpose. As far as the purpose of the present invention such as food sanitation and flavor properties is not impaired, it is possible to blend a plasticizer for improving the solubility in the organic solvent, a leveling agent or surfactant for improving application properties and smoothness and appearance of the coating film, a lubricant for preventing scratches of the coating film, further a coloring pigment, in some cases a polyester resin other than the crystalline polyester resin of the present invention, or a resin other than polyester resins, for example, an acrylic resin emulsion and a polyurethane resin emulsion.

The coating composition of the present invention can also have blended thereto other resin for the purpose of modification such as imparting of flexibility and adhesion of the coating film. Examples of the other resin include amorphous polyester, crystalline polyester, an ethylene-polymerizable unsaturated carboxylic acid copolymer, and an ethylene-polymerizable carboxylic acid copolymer ionomer. By blending at least one resin selected from these examples, the flexibility and/or the adhesion of the coating film can sometimes be imparted.

The coating composition of the present invention can be applied to a metal substrate for cans, such as aluminum, stainless steel, and tinplate, by a gravure coater, a comma coater, or spraying. The coating film thickness is not particularly limited, but usually the dried film thickness is preferably in a range of 3 to 18 $\mu$m, and more preferably in a range of 5 to 15 $\mu$m. The conditions for baking the coating film are usually a temperature range of about 180 to 260°C and a time of about 20 seconds to 1 hour, and more preferably a temperature range of about 200 to 240°C and a time of about 30 seconds to 10 minutes.

The coating film formed of the crystalline polyester resin aqueous dispersion of the present invention is preferably subjected to an aging treatment after baked in the range described above. By performing the aging treatment, the crystallization in the coating film is further progressed and has good retort resistance.

The coating film of the present invention is one (two layers of a substrate/the crystalline polyester resin aqueous dispersion) formed by coating a substrate with the crystalline polyester resin aqueous dispersion. The coating film may have a structure obtained by laying a layer formed of other resin on or beneath the crystalline polyester resin aqueous dispersion layer. In that case, the layer formed of other resin means a coating layer. The coating film of the present invention can be obtained by stacking the crystalline polyester resin aqueous dispersion of the present invention on any one of various substrates in accordance with an ordinary method, and further stacking other resin layer.

The metal can of the present invention has the coating film. The metal can can be obtained by applying to one surface or both surfaces, or an edge surface as necessary of any metal plate that can be used for cans for, for example, beverages and canned products, lids and caps of the cans, and the like, and that are made from a metal material. Examples of the metal material include tinplate, tin free steel, and aluminum. The metal plates made from these metal materials may be used after preliminarily subjected to a phosphoric acid treatment, a chromic acid chromate treatment, a phosphoric acid chromate treatment, an anticorrosion treatment with other rust-preventive treatment agent, or a surface treatment performed for the purpose of improving the adhesion of the coating film.

Examples

As hereunder, the present invention will be more specifically illustrated by referring to Examples although the present invention is not limited to those Examples. Evaluations of various properties were carried out in accordance with the following methods. The unit simply represented by "part" means "part by mass", and "%" means "mass%".

<Crystalline polyester resin (A)>

(1) Measurement of resin composition

A sample of the crystalline polyester resin was dissolved in deuterated chloroform and subjected to 1H-NMR analysis using nuclear magnetic resonance (NMR) apparatus 400-MR manufactured by Varian Inc. The mole ratio between components was obtained from the ratio of integral values in the analysis.

(2) Measurement of reduced viscosity (unit: dl/g)

A sample (0.1 g) of the crystalline polyester resin was dissolved in 25 cc of a phenol/tetrachloroethane (mass ratio 6/4) mixed solvent, and the reduced viscosity was measured at 30°C using an Ubbelohde's viscometer.

(3) Measurement of melting point (Tm), endothermic peak, heat quantity of fusion (J/g), and glass transition temperature (Tg)

The measurement was performed using differential scanning calorimeter (DSC) DSC-220 manufactured by Seiko Instruments Inc. A crystalline polyester resin in an amount of 2 g was dissolved in 8 g of chloroform, applied to a non-corona-treated surface of a polypropylene film (manufactured by TOYOBO Co., Ltd., P2162) so as to have a dried film thickness of 10 $\mu$m, and subjected to an aging treatment at 80°C for 10 minutes. The obtained coating film was peeled from the polypropylene film. A sample of the coating film (5 mg) was hermetically sealed in an aluminum container with a lid. A nitrogen gas was flowed thereinto at 30 ml/min so as to form a nitrogen atmosphere. Then, the sample was cooled to -50°C using liquid nitrogen and next heated to 200°C at 20°C/min. The temperature at the top of the maximum endothermic peak obtained through this process was defined as the melting point (Tm, unit: °C), and the value of integral obtained by deducting the baseline from the maximum endothermic peak was defined as the heat quantity of fusion (J/g) of the maximum endothermic peak. Further, the top of a peak other than the melting point was determined as an endothermic peak (unit: °C), and the value of integral obtained by deducting the baseline from the endothermic peak was determined as the heat quantity of fusion (J/g) of the endothermic peak. The values of integral were calculated through automatic calculation conducted by software attached to DSC-220. On the other hand, a sample was, using the measuring device, heated to 200°C under the same conditions, then rapidly cooled to -50°C, and heated again to 200°C at 20°C/min. On the endothermic curve obtained through this process, the temperature at the intersection of the base line before an endothermic peak and the tangent line approaching the endothermic peak was defined as the glass transition temperature (Tg, unit: °C).

(4-1) Measurement of acid value

A sample (0.2 g) of the crystalline polyester resin was dissolved in 40 ml of chloroform and titrated with a 0.01 N ethanol solution of potassium hydroxide so as to obtain the equivalent per $10^6$ g (eq/ton) of the polyester resin. Phenolphthalein was used as an indicator.

(4-2) Measurement of concentration of metal sulfonate salt

A sample (0.5 g) of a crystalline polyester resin was weighed into a platinum crucible, and subjected to preliminary carbonization performed at 400°C on a hot plate and then to ashing at 550°C for 8 hours in an electric furnace (electric furnace FO610 manufactured by Yamato Scientific Co., Ltd.). After the ashing, the residue was dissolved in 20 mL of 1.2 N hydrochloric acid and formed into a measurement solution. Subsequently, the concentration of sodium in the measurement solution was measured using a high-frequency inductively coupled plasma optical emission spectrometer (manufactured by Hitachi High-Tech Science Corporation, SPECTROBLUE), under the conditions of a plasma output of 1400 W and a plasma gas flow rate of 12 L/min. The measured value was defined as the concentration of a metal sulfonate salt, and converted to the unit mgKOH/g.

(5) Evaluation of solvent solubility

A crystalline polyester resin (2 g) was dissolved in 8 g of cyclohexanone and heated (left to stand still) at 100°C for 3 hours. The dissolution state of the crystalline polyester resin was observed by visual inspection and determined as follows.

(Determination)

∞: Almost all the resin dissolved (80% or more dissolved)
∘: A slight amount of the resin left undissolved (70% or more dissolved)
Δ: A small amount of the resin left undissolved (60% or more dissolved)
✕: Left undissolved (less than 50%)

(6) Average particle size

The average particle size of a polyester resin aqueous dispersion was measured. For the measurement, a laser diffraction scattering particle size distribution analyzer (Coulter counter LS13 320 manufactured by Beckman Coulter, Inc.) was used. A particle size distribution based on volume was prepared by the analyzer. The value of the average diameter was defined as the average particle size.

(7) Evaluation of storage stability

A polyester resin aqueous dispersion was left to stand still at 25°C for 24 hours. Then, the dispersion state was observed by visual inspection and determined as follows.

(Determination)

∞: No change in appearance
○: Precipitate observed
×: Solidified

<Preparation of test piece>

The crystalline polyester resin aqueous dispersion was applied to one surface of tinplate (JIS G 3303 (2008) SPTE, 70 mm × 150 mm × 0.3 mm) with a bar coater such that the dried film thickness was $10 \pm 2$ μm, baked under the baking conditions of 200°C for 30 seconds and then subjected to an aging treatment at 120°C for 1 hour. The resultant product was used as a test piece (hereinafter, called a "test piece") .

(8) Evaluation of appearance of coating film

The appearance of the coating film of the obtained test piece was determined by visual inspection as follows.

(Determination)

∞: Neither cracks nor aggregates are generated.
○: Cracks or aggregates are generated.
Δ: The coating film is partially peeled.
×: The coating film is entirely peeled.

(9) Evaluation of processability

The processability was evaluated by subjecting the obtained test piece to bending performed at 180° in the direction in which the coating film came outside, and measuring the energization value which reflects a degree of a crack generated in the bent portion of the coating film. The bending was performed with nothing held in the bent portion (so-called 0T). An aluminum sheet electrode (width 20 mm, depth 50 mm, thickness 0.5 mm) was prepared on which a sponge (width 20 mm, depth 50 mm, thickness 10 mm) having been immersed in a 1% aqueous solution of NaCl was placed. A location around the center of the bent portion of the test piece was brought into contact with the sponge in parallel with the 20-mm side of the sponge. A direct-current voltage (5.0 V) was applied between the aluminum sheet electrode and the non-coated portion of the rear surface of the test piece, and the energization value was measured. A smaller energization value means better bending properties.

(Determination)

∞: less than 0.5 mA
○: 0.5 mA or more and less than 1.0 mA
Δ: 1.0 mA or more and less than 2.0 mA
×: 2.0 mA or more

(10) Evaluation of retort resistance

The test piece was placed in a standing position in a stainless steel cup, into which ion-exchanged water was poured to the half height of the test piece. The stainless steel cup was set in a pressure vessel of a retort tester (ES-315 manufactured by TOMY KOGYO CO., LTD.) and a retort treatment was performed at 125°C for 30 minutes. The evaluation of the retort resistance after the treatment was conducted for the vapor contact portion of the coating film that is generally considered to be exposed to severer conditions. The whitening and the blister state of the cured film were determined by visual inspection according to the following criteria.

(Determination)

∞: good (without whitening and blister)
○: slight whitening but no blister
△: some degree of whitening and/or some blisters
✕: remarkable degree of whitening and/or remarkable blisters

Synthetic Example (1) of crystalline polyester resin

Into a 3-L four-neck flask were charged 510 parts by mass of terephthalic acid, 220 parts by mass of orthophthalic acid, 800 parts by mass of 1,4-butanediol, and 0.4 part by mass (0.03 mol% relative to the total acid components) of tetra-n-butyl titanate (hereinafter, sometimes abbreviated as TBT) as a catalyst, and the mixture was gradually heated to 250°C over 3 hours and thus subjected to a transesterification reaction. After the completion of the esterification reaction, the system was gradually decompressed to 10 mmHg over 1 hour and polymerized under reduced pressure, and then further subjected to late-stage polymerization under vacuum at 1 mmHg or less for 120 minutes. After the completion of the polycondensation reaction, the system was cooled to 220°C in a nitrogen atmosphere, next had a prescribed amount of trimellitic anhydride charged thereinto, and was subjected to a reaction by stirring in a nitrogen atmosphere at 220°C for 30 minutes. After the completion of the reaction, a resultant product was extracted and a crystalline polyester resin (Synthetic Example (1)) was thus obtained. The obtained crystalline polyester resin had a reduced viscosity of 0.60 dl/g, a glass transition temperature (Tg) of 15°C, a crystalline melting point (Tm) of 155°C, and an acid value of 320 eq/ton.

Synthetic Examples (2) to (16)

Polyester resins of Synthetic Examples (2) to (16) were produced in the same manner as in Synthetic Example (1), but changing the charging composition, so that the polyester resins had the resin compositions shown in Table 1.

[Table 1]

| Synthetic Example | | | | | 1 | 2 | 3 | 4 | 5 | 6 | 7 | 8 |
|---|---|---|---|---|---|---|---|---|---|---|---|---|
| resin composition | polycarboxylic acid component (mol%) | component (a) | terephthalic acid | 70 | 60 | 50 | 70 | 80 | 49 | 59 | 59 |
| | | | 2,6-naphthalenedicarboxylic acid | | | | | 20 | | | |
| | | other component | adipic acid | | | | | | 10 | | |
| | | component (b) | isophthalic acid | | | | 30 | | | | |
| | | | orthophthalic acid | 30 | 40 | 50 | | | 40 | 40 | 40 |
| | | | sodium 5-sulfoisophthalate | | | | | | | | |
| | | branched component | trimellitic anhydride | | | | | | 1 | 1 | 1 |
| | | after-added | trimellitic anhydride | 3 | 3 | 3 | 3 | 3 | 3 | 3 | 2 |
| | | | ethylene glycol bistrimellitate dianhydride | | | | | | | | 1 |
| | polyalcohol component (mol%) | component (d) | 1,4-butanediol | 100 | 100 | 100 | 80 | 50 | 100 | 100 | 100 |
| | | component (c) | 1,2-propylene glycol | | | | | 20 | | | |
| | | component (e) | 1,4-cyclohexanedimethanol | | | | 20 | 30 | | | |
| Formula: (component (a) + component (d)) − (component (b) + component (c)) | | | | 140 | 120 | 100 | 120 | 130 | 109 | 119 | 119 |
| resin properties | | reduced viscosity (dl/g) | | 0.60 | 0.60 | 0.60 | 0.6 | 0.60 | 0.60 | 0.60 | 0.60 |
| | | acid value (eq/ton) | | 320 | 320 | 320 | 320 | 320 | 320 | 320 | 340 |
| | | concentration of metal sulfonate salt (eq/ton) | | 0 | 0 | 0 | 0 | 0 | 0 | 0 | 0 |
| | | Tg (°C) | | 15 | 15 | 10 | 40 | 50 | 10 | 15 | 15 |
| | | Tm (°C) | | 155 | 146 | 125 | 142 | 145 | 150 | 145 | 140 |
| | | heat quantity of fusion (J/g) of the maximum endothermic peak of Tm | | 22 | 20 | 18 | 21 | 21 | 20 | 20 | 20 |
| | | endothermic peak (°C) on lower-temperature end (between 70°C and 120°C) after subjected to aging treatment at 80°C for 10 minutes | | 115 | 90 | 75 | 90 | 110 | 95 | 90 | 88 |
| | | endothermic peak (°C) on higher-temperature end (between 121°C and 160°C) after subjected to aging treatment at 80°C for 10 minutes | | 152 | 143 | 121 | 140 | 141 | 146 | 143 | 137 |
| | | heat quantity of fusion (J/g) of endothermic peak (°C) on lower-temperature end (between 70°C and 120°C) after subjected to aging treatment at 80°C for 10 minutes | | 0.5 | 1.2 | 1.3 | 1.1 | 1.1 | 0.8 | 1.2 | 1.1 |

| Synthetic Example | | | | | 9 | 10 | 11 | 12 | 13 | 14 | 15 | 16 |
|---|---|---|---|---|---|---|---|---|---|---|---|---|
| resin composition | polycarboxylic acid component (mol%) | component (a) | | terephthalic acid | 59 | 59 | 59 | 40 | 80 | 70 | 90 | 59 |
| | | | | 2,6-naphthalenedicarboxylic acid | | | | | | | 10 | |
| | | other component | | adipic acid | | | | | | | | |
| | | component (b) | | isophthalic acid | | | | | | 30 | | |
| | | | | orthophthalic acid | 39 | 38 | 40 | 60 | 20 | | | 40 |
| | | | | sodium 5-sulfoisophthalate | 1 | 2 | | | | | | |
| | | branched component | | trimellitic anhydride | 1 | 1 | 1 | | | | | 1 |
| | | after-added | | trimellitic anhydride | 2 | 2 | 2 | 3 | 3 | 3 | 3 | 1.5 |
| | | | | ethylene glycol bistrimellitate dianhydride | 1 | 1 | | | | | | |
| | polyalcohol component (mol%) | component (d) | | 1,4-butanediol | 100 | 100 | 100 | 100 | 100 | 80 | 50 | 100 |
| | | component (c) | | 1,2-propylene glycol | | | | | | 20 | 20 | |
| | | component (e) | | 1,4-cyclohexanedimethanol | | | | | | | 30 | |
| Formula: (component (a) + component (d)) − (component (b) + component (c)) | | | | | 119 | 119 | 119 | 80 | 160 | 100 | 130 | 119 |
| resin properties | reduced viscosity (dl/g) | | | | 0.60 | 0.60 | 0.60 | 0.60 | 0.60 | 0.60 | 0.60 | 0.60 |
| | acid value (eq/ton) | | | | 340 | 340 | 220 | 320 | 320 | 320 | 320 | 170 |
| | concentration of metal sulfonate salt (eq/ton) | | | | 45 | 88 | 0 | 0 | 0 | 0 | 0 | 0 |
| | Tg (°C) | | | | 15 | 15 | 15 | 10 | 15 | 35 | 50 | 15 |
| | Tm (°C) | | | | 140 | 140 | 146 | 110 | 180 | 130 | 155 | 145 |
| | heat quantity of fusion (J/g) of the maximum endothermic peak of Tm | | | | 20 | 20 | 20 | 16 | 28 | 18 | 24 | 20 |
| | endothermic peak (°C) on lower-temperature end (between 70°C and 120°C) after subjected to aging treatment at 80°C for 10 minutes | | | | 90 | 91 | 90 | 50 | 140 | 65 | 125 | 90 |
| | endothermic peak (°C) on higher-temperature end (between 121°C and 160°C) after subjected to aging treatment at 80°C for 10 minutes | | | | 138 | 138 | 144 | 106 | 177 | 127 | 152 | 142 |
| | heat quantity of fusion (J/g) of endothermic peak (°C) on lower-temperature end (between 70°C and 120°C) after subjected to aging treatment at 80°C for 10 minutes | | | | 1.1 | 1.1 | 1.2 | 1.6 | 0.3 | 1.3 | 0.6 | 1.1 |

Examples 1 to 11 and Comparative Examples 1 to 5

The solvent solubility of the obtained crystalline polyester resins was evaluated. Tables 2 and 4 show the results.

[Table 2]

| item | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| resin | crystalline polyester resin (Synthetic Example No.) | 1 | 2 | 3 | 4 | 5 | 6 | 7 | 8 | 9 | 10 | 11 |
| | crystalline polyester resin (parts by mass) | 100 | 100 | 100 | 100 | 100 | 100 | 100 | 100 | 100 | 100 | 100 |
| evaluation | solvent solubility | ○ | ○○ | ○○ | ○○ | ○ | ○ | ○○ | ○○ | ○○ | ○○ | ○○ |

[Table 4]

| item | | Comparative Example | | | | |
|---|---|---|---|---|---|---|
| | | 1 | 2 | 3 | 4 | 5 |
| resin | crystalline polyester resin (Synthetic Example No.) | 12 | 13 | 14 | 15 | 16 |
| | crystalline polyester resin (parts by mass) | 100 | 100 | 100 | 100 | 100 |
| evaluation | solvent solubility | ○○ | × | ○○ | × | × |

Examples 12

Production of crystalline polyester resin aqueous dispersion (B-1)

In accordance with the following procedure, the crystalline polyester resin (1) was formed into an aqueous dispersion. Into a reaction container equipped with a stirrer, a condenser, and a thermometer were charged 20 parts by mass of the crystalline polyester resin (1) and 15 parts by mass of propylene glycol monopropyl ether, and the resin was dissolved at 130°C over 2 hours. After the dissolution, the mixture was cooled to 110°C and had 0.5 part by mass of dimethylaminoethanol charged thereinto, and was stirred for 30 minutes. Next, 65 parts of hot water was charged thereinto and stirred for 1 hour. Thereafter, the inner temperature was decreased to room temperature, and a crystalline polyester resin aqueous dispersion (B-1) was obtained. Table 3 shows the evaluation results of the properties.

Examples 13 to 22 and Comparative Examples 6 to 10

The processability and the retort resistance were evaluated using crystalline polyester resin aqueous dispersions (B-2) to (B-16) obtained in the same manner as in Example 12. Tables 3 and 5 show the evaluation results of the properties.

[Table 3]

| item | | Example | | | | | | | | | | |
|---|---|---|---|---|---|---|---|---|---|---|---|---|
| | | 12 | 13 | 14 | 15 | 16 | 17 | 18 | 19 | 20 | 21 | 22 |
| | | B-1 | B-2 | B-3 | B-4 | B-5 | B-6 | B-7 | B-8 | B-9 | B-10 | B-11 |
| crystalline polyester resin aqueous dispersion | crystalline polyester resin (Synthetic Example No.) | 1 | 2 | 3 | 4 | 5 | 6 | 7 | 8 | 9 | 10 | 11 |
| | crystalline polyester resin (parts by mass) | 20 | 20 | 20 | 20 | 20 | 20 | 20 | 20 | 20 | 20 | 20 |
| | propylene glycol monopropyl ether (parts by mass) | 15 | 15 | 15 | 15 | 15 | 15 | 15 | 15 | 15 | 15 | 15 |
| | water (parts by mass) | 65 | 65 | 65 | 65 | 65 | 65 | 65 | 65 | 65 | 65 | 65 |
| physical property | average particle size (nm) | 240 | 200 | 180 | 240 | 240 | 220 | 200 | 200 | 200 | 200 | 240 |
| evaluation | storage stability | ○ | ○○ | ○○ | ○ | ○ | ○ | ○○ | ○○ | ○○ | ○○ | ○○ |
| | appearance of coating film | ○ | ○○ | ○○ | ○ | ○ | ○ | ○○ | ○○ | ○○ | ○○ | ○○ |
| | processability | ○○ | ○○ | ○○ | ○○ | ○ | ○○ | ○○ | ○○ | ○○ | ○○ | ○○ |
| | retort resistance | ○○ | ○○ | ○ | ○○ | ○○ | ○ | ○○ | ○○ | ○○ | ○ | ○○ |

[Table 5]

| item | | Comparative Example | | | | |
|---|---|---|---|---|---|---|
| | | 6 | 7 | 8 | 9 | 10 |
| | | B-12 | B-13 | B-14 | B-15 | B-16 |
| crystalline polyester resin aqueous dispersion | crystalline polyester resin (Synthetic Example No.) | 12 | 13 | 14 | 15 | 16 |
| | crystalline polyester resin (parts by mass) | 20 | 20 | 20 | 20 | 20 |
| | propylene glycol monopropyl ether (parts by mass) | 15 | 15 | 15 | 15 | 15 |
| | water (parts by mass) | 65 | 65 | 65 | 65 | 65 |
| physical property | average particle size (nm) | 180 | dispersion failure | 180 | dispersion failure | dispersion failure |
| evaluation | storage stability | ○○ | × | ○○ | × | cannot be evaluated |
| | appearance of coating film | ○○ | cannot be evaluated | ○○ | cannot be evaluated | cannot be evaluated |
| | processability | ○○ | cannot be evaluated | ○○ | cannot be evaluated | cannot be evaluated |
| | retort resistance | × | cannot be evaluated | × | cannot be evaluated | cannot be evaluated |

As is clear from Tables 2 and 3, the coating films obtained from the crystalline polyester resin aqueous dispersions of the present invention are excellent in all of the solvent solubility, the processability, and the retort resistance. On the other hand, as shown in Tables 4 and 5, in Comparative Example 1, the melting point in the requirement (1) of the crystalline polyester resin is low and the temperature of the endothermic peak in the requirement (2) of the crystalline polyester resin is also lower than the prescribed range, and therefore the retort resistance was poor. In Comparative Example 2, the melting point in the requirement (1) is high and the temperature of the endothermic peak in the requirement (2) is also higher than the prescribed range, making the crystalline polyester resin have poor solvent solubility, and therefore an aqueous dispersion could not be formed. In Comparative Example 3, the temperature of the endothermic peak in the requirement (2) is lower than the prescribed range, and therefore the retort resistance was poor. In Comparative Example 4, the temperature of the endothermic peak in the requirement (2) is higher than the prescribed range, making the crystalline polyester resin have poor solvent solubility, and therefore an aqueous dispersion could not be formed. In Comparative Example 5, the crystalline polyester resin had a low acid value, and therefore an aqueous dispersion could not be formed.

Industrial Applicability

The product of the present invention relates to a crystalline polyester resin aqueous dispersion that has excellent solvent solubility, processability, and retort resistance, and to a coating and a coating film that contain the dispersion. The present invention is suitable as a main agent of a coating applied to, for example, metal cans for food and beverages.

**Claims**

1.　A crystalline polyester resin aqueous dispersion containing a crystalline polyester resin (A) satisfying requirements (1) to (3) described below.

　　(1) The crystalline polyester resin (A) has a melting point of 120°C to 160°C.
　　(2) The crystalline polyester resin (A) has at least one endothermic peak between 70°C and 120°C and at least one endothermic peak between 121°C and 160°C when heated from -50°C to 200°C at 20°C/min by differential scanning calorimetry (DSC) after subjected to an aging treatment at 80°C for 10 minutes.

(3) The crystalline polyester resin (A) has an acid value of 180 eq/ton or more.

2. A coating composition containing the crystalline polyester resin aqueous dispersion according to claim 1, wherein the coating composition has a content of a curing agent of less than 1 part by mass, relative to 100 parts by mass (solid content) of the crystalline polyester resin (A) in the crystalline polyester resin aqueous dispersion.

3. A coating film obtained from the coating composition according to claim 2.

4. A metal can having the coating film according to claim 3.

[FIG. 1]

## INTERNATIONAL SEARCH REPORT

| International application No. |
| --- |
| **PCT/JP2023/045870** |

### A. CLASSIFICATION OF SUBJECT MATTER

*C08G 63/127*(2006.01)i; *C08J 3/03*(2006.01)i; *C09D 5/02*(2006.01)i; *C09D 167/00*(2006.01)i
FI: C08G63/127; C08J3/03 CFD; C09D5/02; C09D167/00

According to International Patent Classification (IPC) or to both national classification and IPC

### B. FIELDS SEARCHED

Minimum documentation searched (classification system followed by classification symbols)

C08G63/127; C08J3/03; C09D5/02; C09D167/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| A | WO 2022/202832 A1 (TOYOBO CO., LTD.) 29 September 2022 (2022-09-29) entire text (in particular, claims, examples) | 1–4 |
| A | WO 2022/168910 A1 (TOYOBO CO., LTD.) 11 August 2022 (2022-08-11) entire text (in particular, claims, examples) | 1-4 |
| A | JP 59-78234 A (TOYO SEIKAN KAISHA LTD.) 07 May 1984 (1984-05-07) entire text (in particular, claims, examples) | 1-4 |
| A | JP 2019-137790 A (GOO CHEMICAL CO., LTD.) 22 August 2019 (2019-08-22) entire text (in particular, claims, examples) | 1-4 |

☐ Further documents are listed in the continuation of Box C.   ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **01 March 2024** | **12 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2023/045870**

| Patent document cited in search report | | | Publication date (day/month/year) | Patent family member(s) | | | Publication date (day/month/year) |
|---|---|---|---|---|---|---|---|
| WO | 2022/202832 | A1 | 29 September 2022 | CN | 117157343 | A | |
| WO | 2022/168910 | A1 | 11 August 2022 | EP | 4289904 | A1 | |
| | | | | entire text (in particular, claims, examples) | | | |
| | | | | CN | 116848171 | A | |
| | | | | KR | 10-2023-0142751 | A | |
| JP | 59-78234 | A | 07 May 1984 | US | 4500575 | A | |
| | | | | entire text (in particular, claims, examples) | | | |
| JP | 2019-137790 | A | 22 August 2019 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020079393 A

- JP 2018123249 A